# EUROPEAN PATENT APPLICATION

(11) **EP 1 031 519 A2**
(43) Date of publication of application: **30.08.2000**
(21) Application number: 99121663.1
(22) Date of filing: 02.11.1999
(51) Int. Cl.: B65F 1/00, B65F 3/00

(54) **System for selective waste collection**

(30) Priority: 03.11.1998 IT SV980064
(71) Applicant: Pujals, Juan Ricart, 08500 VIC BARCELONA (ES)
(72) Inventor: Bartolomeo, Mongiardino, 16121 Genova (IT)
(74) Representative: Karaghiosoff, Giorgio A.

(57) **Abstract**

A system for selective waste collection and accounting, particularly for municipal waste, or the like, comprising a plurality of collection sites spread over the relevant area, each having different containers for different product types; waste packages, which are differentiated by type and may be differentiated by user; means for identification of users. Means for distinguishing unambiguously the waste deposited by a user from that deposited by another user; a computer (5) with maps correlating users and identification means stored therein, whereto means (4) for weighing waste for each waste type and means for generating correlation between said values and the identification code of each user are associated; a unit (5) whereon a program for computing the service costs and a program for computing premiums or penalties according to the weight result and hence to the behavior of the user are loaded; a unit for debiting said costs and/or penalties and/or storing or crediting said premiums.

## Description

The invention relates to a system for selective waste collection and accounting, particularly for municipal waste, or the like.

The object of the invention is to provide a system for selective waste collection and accounting, considering both waste types and the natural or legal persons whereto said waste can be associated, in order both to monitor the environmental impact wherefor each natural or legal person is responsible, with respect to the higher or lower production of predetermined waste types and to determine the cost of waste disposal services in a targeted and customized manner, either to reward or to penalize directly said natural or legal persons, according to their more or less environmentally responsible behavior.

Several selective waste collection systems are known, which have been used for a long time. All these systems do not account for a direct relationship between the behavior of persons and service cost. Also, said systems cannot accurately monitor amounts by waste types produced from the different persons.

Disposal costs increase dramatically with time, especially as regards poorly biodegradable or highly stable materials. In addition to waste storage-related problems in landfills, individual citizens or companies should be more responsible, and should tend to prefer products having acceptable biodegradability characteristics.

At present, disposal costs are equally allocated on all users, regardless of their more or less responsible waste production behavior, whereby those who make even small efforts are penalized when compared to those who simply ignore the problem and make no change to their behavior.

The type of waste produced is also almost neglected. Some people produce degradable and easily disposable waste, others produce more hardly disposable waste, or even involving pollution risks. The invention achieves the above purposes by providing a system including the combination of a movable means for weighing the waste, controlling, identifying the citizen who has produced it and the waste type and for purging the differentiated waste.

In combination with the above, the system comprises a network of stationary sites, controlled by the movable means.

The invention achieves the above purposes by providing a system as described hereinbefore, comprising:
a) a plurality of collection sites spread over the relevant area.
b) Said plurality of sites has a plurality of different containers for different product types.
c) Waste packages, which are differentiated by type and may be differentiated by user, whether the latter is a natural or legal person.
d) Means for identification of a waste producing person.
e) Means for distinguishing unambiguously the waste deposited by a user from that deposited by another user.
f) A central processing unit with maps correlating waste producers and means for identifying them stored therein.
g) Means for weighing the produced waste analytically for each waste type and means for generating correlation between said values and the identification code of each waste producer or directly the waste producer being associated to said unit.
h) A unit whereon a program for computing the service costs and a program for computing premiums or penalties according to the weight result and hence to the behavior of the user are loaded.
i) A unit for debiting said costs and/or penalties and/or for storing or crediting said premiums.

According to the structure of the area, the above may be implemented in several different manners.

One manner provides stationary collection sites, whereas the weighing means and the code control, credit and debit units, and the like, are installed on a vehicle moving from one site to another.

A further manner provides integration of weighing means and of customized credit or debit means in the sites.

The latter solution can be wholly movable, so as to obtain the most flexible location thereof over the relevant area.

The means for identifying the waste producer may consist of codes, particularly impressed or recorded or stored on cards, whereto an account, a premium credit and a cost and penalty debit account may be associated.

Correlation between a waste producer and waste, as well as waste amount and type may be established in a direct or indirect manner.

In the former case, upon leaving waste in a container, the waste producer enters his/her code or has an automatic reader read his/her code, or gives the operating staff his/her code or his/her details. This code starts the weighing process which, by means of an electronic scale, allows to store data directly in the central unit and to process costs, penalties and/or premiums in real time.

Alternatively, the waste producer applies an identification element, particularly a code support on a personal waste container. This may have the form of a bar code, or the like. Waste is weighed and said values are correlated to a code, i.e. to a user, at a subsequent time, when the user is not there, and then the user receives the results.

The actual waste collection is executed by further means specifically designed for this function.

Yet, the means for weighing waste and for correlating it to a waste producer, as well as the means for accounting costs, penalties and premiums may be integrated on a vehicle together with the actual collection and transportation means.

Preventing frauds and misappropriations, which involve substantial economic damages for one or more users to the benefit of others is critical in the system according to the invention. Hence, when the identification and waste-producer correlation process takes place indirectly, containers must be provided with tamper-proof means, especially with means allowing to introduce a waste bag or package into a container, while preventing access to the inner part to seize waste left by others, thereby modifying the customized system to one's own benefit.

Thanks to the arrangements of the invention, several advantages are obtained:

First, the waste collection system is rationalized, with three distinct functions. Collecting individual waste in intermediate containers and according to the different types thereof. Determining the waste volume with respect to the different types thereof produced by each service user and accurately calculating costs. Collecting the intermediate containers for selectively carrying them to the different disposal and/or storage sites.

At the same time, an instrument is obtained for monitoring with the highest accuracy waste types and overall waste amounts even in very small areas. This allows to establish proper policies for promotion of certain more or less environmentally friendly products, to reduce the volume of certain waste types. Also, since the system is based on a precise univocal correlation with the waste producer, it provides a powerful tool to generate fair cost allocation mechanisms, especially based on the more or less responsible behaviors of said producers, and at the same time to add penalization and rewarding mechanisms which can persuade users to have more ecological or environmentally responsible behaviors.

Regarding premiums or "bounties" granted to those who have more environmentally responsible behaviors, these may have different forms, such as tariff reductions directly applied in the calculation of service costs, or discount or credit cards with predetermined amounts, or particular coins having a recognized validity and coined by official bodies, and particularly bearing a specific recognition name.

The separation between the means designed for the different functions allows to perform collection so that waste can be carried to disposal, recycling or storage in low traffic times, whereas the weighing and correlation functions may be executed by using less cumbersome and hence less expensive and nimbler means and in favorable times. By using the deferred or indirect system, users can avoid to meet tight and binding time requirements. A further advantage consists in grouping the intermediate containers, the so-called garbage cans, in predetermined locations, without having to scatter them over the whole area. These locations for garbage cans may be associated to temporary structures, such as gazebos or the like, which can also have barriers for preventing intrusion by animals, such as cats, rats or else, which would scatter waste over the area, damage the bags and create the conditions for additional work.

The invention relates to further improvements which form the subject of the dependent claims.

The characteristics of the invention and the advantages derived therefrom will appear more clearly from the following description of an embodiment shown in the accompanying drawings, in which:
Fig. 1 shows a stationary waste collection site and a vehicle for weighing, reading the personal codes of users and processing data in an electronic computer system.
Fig. 2 shows a detail of the vehicle for weighing and acquiring data to be processed.
Fig. 3 is a cross sectional view of the area of the weighing and acquisition means.
Fig. 4 is a plan view of a movable collecting site, in the form of a trailer of a commercial truck.

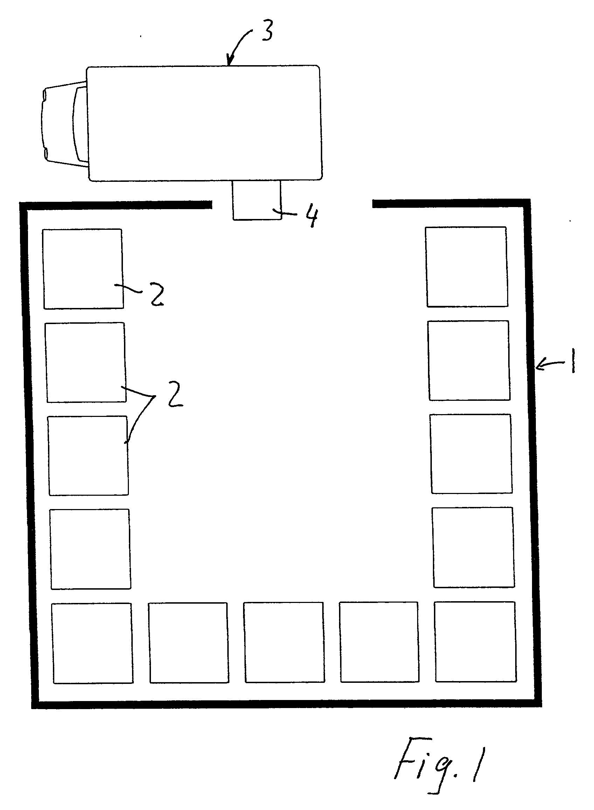

Referring to fig. 1, a waste collection system or installation, particularly intended for municipal waste, comprises a plurality of stationary sites 1, spread over the relevant area, in the form of closed premises, such as sheds, or the like, or of partially open buildings such as gazebos or the like.

The stationary sites 1 are designed to house a plurality of collection containers 2 which differ from each other e.g. by means of writings and/or colors and are designed to only hold waste of a certain homogeneous type, in order to assist recycling operations.

The partially open stationary sites, such as gazebos or the like, may have enclosures at their periphery and a gate, so as to prevent animals from acceding thereto, and from going into the containers, for example opening the packages, such as bags or the like, and being trapped in the containers, at their own death risk and at the risk of the staff whose task is to empty the containers.

The containers 2 advantageously have apertures for introducing waste and apertures for unloading it. Means for closing unloading apertures prevent them from being opened by unauthorized persons, whereas the loading apertures of the containers are provided with tamper-proof means, preventing access to the container even upon loading.

This may be obtained by using flap doors which can oscillate around one side, e.g. a horizontal side and have two radial walls at a certain angular distance from each other with respect to the axis of oscillation. In the closed position, one of the radial walls is the internal one, whereas the other extends parallel to the wall and closes the aperture. By overturning the door outwards in the opening position the inner radial wall is caused to oscillate forward to close the loading aperture, whereas the outwardly oscillating wall acts as a surface whereon the package, e.g. the waste bag can be laid. The inward oscillation of the door causes the package to be thrown into the container. The two radial walls may be advantageously hinged independently of each other, there being provided means for separate oscillation of the inner wall, allowing it to oscillate with such an inclination as to cause the pack to fall towards the bottom of the container, as an inclined surface. This may be controlled by means of an external control lever, which is stopped in its control motion by mechanical means, such as abutments or the like, controlled by the oscillation motion of the door.

The packages for the different waste types are provided with differentiating means, typically different colors or the like, and are tagged with bar code labels, for identifying the user.

Two types of vehicles are associated to the stationary collection sites. A vehicle for weighing and allocating amounts by waste type to a user and a vehicle for collecting waste to be carried to storage. Typically, the two different vehicles visit the sites successively at different times.

The first type of vehicle, denoted with numeral 3 in the figures, consists of a light movable vehicle, comprising weighing means 4 and electronic processing means 5 including a memory, code reading means, particularly bar code reading means, and a processing program loaded thereon.

The processing means 5 have interfaces for data exchange with other processors, for example a central computer, or means for communication with the central computer, such as a modem and a cellular phone or a radio transmitter.

Hence, all processed information can be downloaded for further processing and storage in the central computer, either subsequently or in real time.

The weighing means 4 are preferably of the electronic type and advantageously have an analog-to-digital converter which turns the weight-related signals into digital signals transferred to a port of the local computer. The weighing means of the electronic type are known per se and may have different constructions. A particular embodiment provides a supporting surface which is positioned on a stationary bearing surface, pressure transducers producing related electric signals being interposed therebetween.

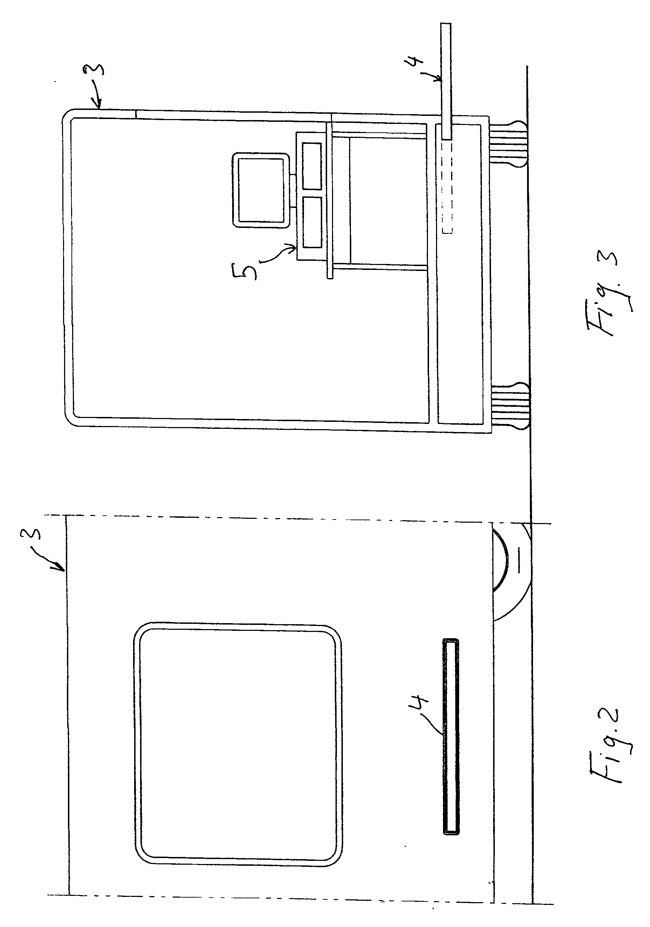

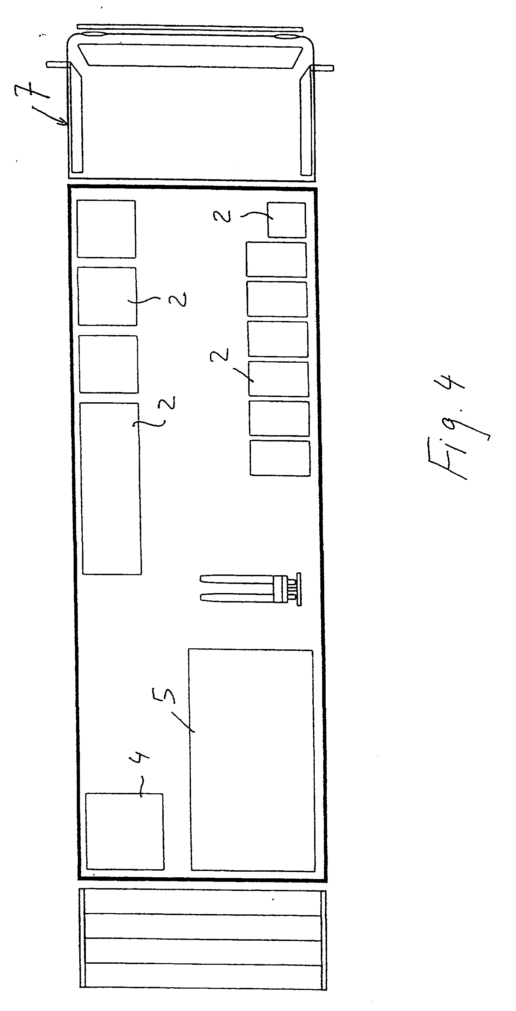

This type of weighing means 4 is highly advantageous, because it is poorly affected by dirt, not cumbersome and heavy and allows to easily make the weighing means 5 in the form of a sliding insert disappearing inside a space of the vehicle 3 as shown in figs. 2 and 3.

Thanks to the above system, the service costs for collection and disposal can be determined accurately and in real time for each user, and the efforts of those who have more environmentally responsible behaviors can be rewarded, as compared to those who do not have such behaviors, who can even be penalized.

A further considerable advantage consists in that administrations can monitor with the highest accuracy the waste amount by type and user. This is critical, especially for manufacturing businesses producing almost exclusively one waste type, which may involve more or less expensive or difficult disposal and processing. Therefrom, administrations can take measures allowing to change both behaviors and investments in the area of waste disposal.

The other type of vehicle, designed for collection, simply unloads the containers and carries the waste divided by type to the different disposal sites.

In this case, different vehicles for each waste type or vehicles having separate loading spaces may be provided.

In order to prevent waste from being thrown into the containers after weighing, the stationary sites may be provided with closing gates having locks which may be closed when the first weighing and data processing vehicle 3 completes its operations and opened again upon collection by the relevant transporting vehicles.

This involves an important advantage. In fact, although municipal regulations provide time restrictions to throw waste in the containers, currently these regulations are completely disregarded, whereas by using the system of the invention, this operation could not be executed at forbidden times. Advantageously, the lock may be of the remote controlled and/or timed type, whereas the gates might be provided with opening and closing actuators.

Users would not even find desirable to leave waste outside the site, due to its being closed, because, in this case, they would not benefit from premiums granted for environmentally responsible behaviors, and they could be even penalized if they were recognizable, for instance, if they left the code label on the package, or bag.

With reference to the variant embodiment as shown in fig. 4, the stationary sites may be replaced by self-propelled sites 6, e.g. provided on trailers of commercial vehicles 7. In this case, their location over the area could vary from day to day. This might be particularly advantageous in that at present there are few recyclable waste materials, hence there is no need to provide user access to the differentiated containers every day.

In this case, the self-propelled unit may directly have the collection containers, the weighing means and the computer on board.

Containers might be such as to allow direct access from different locations outside the self-propelled site 6, or the containers might be simply placed inside the self-propelled unit.

Weighing operations may be executed either directly upon loading of waste packages into the different containers, if the operating staff is continuously present, or in a deferred manner, as in the case of the previous example.

The self-propelled site 6, 7 may in turn perform the function to transfer waste to the disposal sites or to a further site in which it is sorted and loaded onto dedicated vehicles.

With reference to the identification codes and to the processing means 5, these codes may be also impressed on magnetic strip and/or microprocessor cards, the so-called badges, whereas means for reading and/or writing on said magnetic strip or microprocessor cards are associated to the local computer 5 or to the central computer. The local computer or a central computer which is or may be connected on a network to the local computer 5, as described above, include a memory whereon a program for processing costs, premiums and penalties is loaded. These values may be stored on the cards. Advantageously, the magnetic strip or microprocessor cards are used in combination with reading and/or writing locations of a network for crediting and debiting costs, premiums and penalties, which network is controlled by a central computer whereon user accounts are stored. The network may be, for instance, an existing appropriately modified telephone system or an ATM circuit, or even an alternative circuit such as the one known in Italy as "city card" and used by municipalities for ordering and issuing administrative documents. The network may also be an ATM network associated to an organization acting as a tax collector for municipal authorities.

Obviously, the invention is not limited to what is described and illustrated herein, but may be greatly varied especially as regards construction without departure from the guiding principle disclosed above and claimed below.

## Claims

1. A system for selective waste collection and accounting, particularly for municipal waste or the like, including the combination of a movable means for weighing the waste, controlling, identifying the citizen who has produced it and the waste type and for purging the differentiated waste.

2. A system as claimed in claim 1, characterized in that, in combination with the above, the system comprises a network of stationary sites, controlled by the movable means.

3. A system for selective waste collection and accounting, particularly for municipal waste, or the like, as claimed in claim 1 or 2, comprising a plurality of collection sites spread over the relevant area,
characterized in that
a) Said plurality of sites (1, 7) has a plurality of different containers for different product types.
b) Waste packages (2), which are differentiated by type and may be differentiated by user, whether the latter is a natural or legal person.
c) Means for identification of a waste producing person.
d) Means for distinguishing unambiguously the waste deposited by a user from that deposited by another user.
e) A central unit (5) with maps correlating waste producers and means for identifying them stored therein.
f) Means (4) for weighing the produced waste analytically for each waste type and means for generating correlation between said values and the identification code of each waste producer or directly the waste producer being associated to said unit.
g) A unit (5) whereon a program for computing the service costs and a program for computing premiums or penalties according to the weight result and hence to the behavior of the user are loaded.
h) A unit for debiting said costs and/or penalties and/or for storing or crediting said premiums.

4. A system as claimed in one or more of the preceding claims, characterized in that the collection sites are stationary (1), whereas the weighing means (4) and the code control, credit and debit processing units (5), and the like, are installed on a vehicle (3) moving from one stationary site to another.

5. A system as claimed in claim one or more of the preceding claims, characterized in that these sites (7) are integrated with the weighing (4) and processing means for user identification, correlation to the weight and to the waste type and customized credit or debit.

6. A system as claimed in claim 5, characterized in that the integrated site is wholly movable, so as to obtain the most flexible location thereof over the relevant area.

7. A system as claimed in one or more of the preceding claims, characterized in that the means for identifying the waste producer may consist of codes, particularly impressed or applied such as bar codes or codes recorded or stored on cards of the same types as credit cards, whereto an account, a premium credit and a cost and penalty debit account may be associated.

8. A system as claimed in one or more of the preceding claims, characterized in that correlation between a waste producer and waste, as well as waste amount and type may be established in a direct or indirect manner.

9. A system as claimed in one or more of the preceding claims, characterized in that, when waste is loaded into a container, the waste produces enters the code or has an automatic reader read the code, or gives the operating staff the code or his/her details, the weighing and data storage processes being started, based on said code, directly in the unit for processing costs, penalties and/or premiums in real time or in a deferred manner.

10. A system as claimed in one or more of the preceding claims, characterized in that the waste producer applies an identification element, particularly a code support on an personal waste container, e.g. in the form of a bar code or the like, whereas waste is weighed and said values are correlated to a code, i.e. to a user, at a subsequent time, when the user is not there, and then the user receives the results.

11. A system as claimed in one or more of the preceding claims, characterized in that it has another type of means which are used to actually collect waste and transfer it to disposal sites or intermediate sites.

12. A system as claimed in one or more of the preceding claims 1 to 8, characterized in that the means (4) for weighing waste and for correlating it to a waste producer, as well as the processing means (5) for accounting costs, penalties and premiums are integrated on a vehicle (6, 7) together with the actual collection and transportation means.

13. A system as claimed in one or more of the preceding claims, characterized in that the scale has pressure transducers producing related electric signals which are transferred to a computer (5) by an analog-to-digital converter, whereas the code of the waste producer is entered manually, e.g. by typing it on a keyboard, is read from encoding means associated to the waste package, e.g. thanks to a bar code sensor, or is read from a magnetic or microprocessor card, e.g. thanks to a magnetic or microprocessor card reader, directly by the processing means (5).

14. A system as claimed in one or more of the preceding claims, characterized in that it has an additional circuit consisting of a plurality of units for reading/writing on magnetic cards and/or on microprocessor cards, to credit or debit premiums or penalties to service costs, which circuit is managed by a processing unit interfaced with the processing units (5) associated to the weighing means (4) either by data exchange on network support or connection at a subsequent time, or in real time, by using radio or cellular telecommunication lines.

15. A system as claimed in one or more of the preceding claims, characterized in that the containers (2) are provided with tamper-proof means, especially with means allowing to introduce a waste bag or package, while preventing access to the inner part to seize waste left by others.

16. A system as claimed in one or more of the preceding claims, characterized in that the stationary sites (1) and the self-propelled sites (6, 7) are provided with closing means, such as peripheral nets, walls or the like, and gates, with locks operated by keys, and/or of the servocontrollable and/or timed type, in combination with motor-driven actuators for the door wings.
